Europäisches Patentamt

European Patent Office

Office européen des brevets

(11) Veröffentlichungsnummer: **0 221 291 B1**

# EUROPÄISCHE PATENTSCHRIFT

(45) Veröffentlichungstag der Patentschrift: **10.07.91**

(21) Anmeldenummer: **86112465.9**

(22) Anmeldetag: **09.09.86**

(51) Int. Cl.⁵: **F16C 13/00**, D21G 1/02, B21B 13/14

(54) **Walzenaggregat für Kalander, Glättwerke oder dergleichen sowie Verfahren zu seiner Herstellung.**

(30) Priorität: **02.11.85 DE 8531065 U**

(43) Veröffentlichungstag der Anmeldung:
**13.05.87 Patentblatt 87/20**

(45) Bekanntmachung des Hinweises auf die
Patenterteilung:
**10.07.91 Patentblatt 91/28**

(84) Benannte Vertragsstaaten:
**AT BE CH DE FR GB IT LI NL SE**

(56) Entgegenhaltungen:
**DE-A- 2 606 545      DE-C- 673 917**
**DE-U- 8 518 933      GB-A- 888 924**
**US-A- 3 747 181      US-A- 4 377 336**

(73) Patentinhaber: **Ramisch Kleinewefers GmbH**
**Neuer Weg 24-40**
**W-4150 Krefeld(DE)**

Patentinhaber: **Kleinewefers GmbH**
**Kleinewefersstrasse 25**
**W-4150 Krefeld 1(DE)**

(72) Erfinder: **Die Erfinder haben auf ihre Nennung verzichtet**

(74) Vertreter: **Goddar, Heinz J., Dr. et al**
**FORRESTER & BOEHMERT Widenmayerstrasse 4/I**
**W-8000 München 22(DE)**

**Beschreibung**

Die Erfindung betrifft ein Walzenaggregat für Kalander, Glättwerke oder dgl. mit den Merkmalen des ersten Teiles des Anspruchs 1.

Bei einem solchen, aus der GB-A-888 924 vorbekannten Walzenaggregat ist das Auswechseln des eine Oberflächengravur tragenden zylindrisches Körpers kompliziert. Die Verwendung unterschiedlicher Oberflächengravuren wird insbesondere dann kostenintensiv, wenn es sich um eine biegekompensierte Walze handelt.

Zum Stand der Technik wird weiter auf die US-A-3 747 181 sowie die DE-U-8 518 933 hingewiesen. Auch bei den Vorschlägen nach diesen Druckschriften ist ein einfaches Wechseln der Oberflächengravur jedoch nicht möglich.

Der Erfindung liegt die Aufgabe zugrunde, das Walzenaggregat mit den Merkmalen des ersten Teils des Anspruchs 1 derart weiterzubilden, daß das Wechseln der Oberflächengravur zwecks Reduzierung der Kosten für die oberflächengravierte Walze vereinfacht wird.

Erfindungsgemäß wird diese Aufgabe durch im zweiten Teil des Anspruchs 1 angegebenen Merkmale gelöst. Die Unteransprüche 1 bis 12 geben bevorzugte Ausgestaltungen eines derartigen Walzenaggregats, die Ansprüche 13 und 14 ein bevorzugtes Verfahren zum Herstellen eines solchen Walzenaggregats an.

Die Erfindung wird im folgenden anhand einer Zeichnung erläutert. Dabei zeigt:

Fig. 1 ein Ausführungsbeispiel des Walzenaggregats nach der Erfindung; und

Fig. 2 einen Kalander mit einer Walzenwechseleinrichtung in der Ansicht.

Zum dargestellten Walzenaggregat gehört eine Gegenwalze 1, die als Vollwalze oder als Hohlwalze mit großer Wandstärke ausgeführt ist. Die Gegenwalze 1 kann nicht dargestellte Bohrungen eines Beheizungssystems aufweisen.

Zum Walzenaggregat gehört ferner eine hydraulisch biegekompensierte Walze 2 mit einem Walzenmantel 3, der zur Kompensation von Durchbiegungen z. B. hydraulisch auf einem feststehenden Joch 4 abgestützt ist. Die beispielhafte hydraulische Abstützung 5 ist im einzelnen nicht dargestellt. Derartige Abstützungen sind in verschiedenen Ausführungen bekannt. Sie besitzen z. B. mehr axial verteilte Elemente, die am inneren Umfang des Walzenmantels 3 angreifen. Bei anderen Ausführungen wird die Innenseite des Walzenmantels 3 hydraulisch mit Druck beaufschlagt, wobei eine Aufweitung des Walzenmantels zur Biegekompensation dient.

Auf den Walzenmantel 3 ist eine Hülse 6 aufgeschoben, deren äußere Umfangsfläche mit der Oberflächengravur versehen ist. Da der Walzenmantel 3 sowie die Hülse 6 verhältnismäßig dünnwandig sind, erfährt auch die Hülse 6 eine entsprechende Biegekompensation.

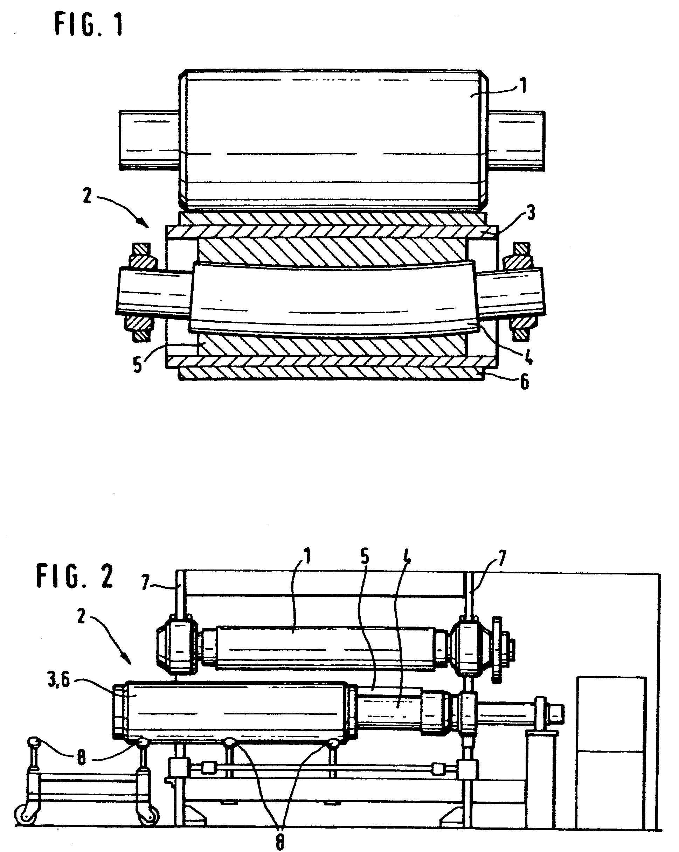

In Fig. 2 ist das Walzenaggregat in einem Kalander dargestellt, von dem nur zwei einander gegenüberliegende Gestellwände 7 wiedergegeben sind. Die Gegenwalze 1 ist in den Gestellwänden 7, wie dargestellt, gelagert.

Unterhalb der Gegenwalze 1 ist die biegekompensierte Walze 2 ebenfalls in den Gestellwänden gelagert, jedoch in Lagerschildern, die in Richtung auf die Lager der Gegenwalze 1 verstellbar angeordnet sind. Zum Wechseln der Oberflächengravur wird ein Lagerschild der hydraulisch biegekompensierten Walze 2 entfernt und wird dann der Walzenmantel 3 bzw. die Hülse 6 in axialer Richtung abgezogen, wobei der Walzenmantel 3 bzw. die Hülse 6 auf Stützrollen 8 geführt ist. Anschließend kann ein neuer Walzenmantel 3 bzw. eine neue Hülse 6 in anderer Oberflächengravur auf das feststehende Joch 4 aufgeschoben werden.

Der Walzenmantel 3 kann aus einem Material mit einem größeren Wärmeausdehnungskoeffizienten als die Hülse 6 bestehen, wobei der Außendurchmesser des Mantels 3 in kaltem Zustand im wesentlichen dem Innendurchmesser der Hülse 6 entspricht. Hierdurch ist im kalten Zustand ein einfaches Abziehen bzw. Aufschieben der Hülse 6 möglich, während die bei Betriebstemperatur durch die entstehende thermische Spannung die Hülse 6 kraftschlüssig fest auf dem Walzenmantel 3 sitzt.

Als Material für den Walzenmantel kann beispielsweise Aluminium oder für die Hülse beispielsweise Stahl verwendet werden.

**Ansprüche**

1. Walzenaggregat für Kalander, Glättwerke oder dgl., mit einer biegekompensierten Walze (2) und einem Walzenmantel (3), der zur Kompensation von Durchbiegungen - z. B. hydraulisch - abgestützt ist, und einer Gegenwalze (1), wobei eine der Walzen, ggf. die biegekompensierte Walze (2), eine lösbare Oberflächengravur aufweist, dadurch gekennzeichnet, daß die Oberflächengravur auf einer den Walzenmantel (3) der biegekompensierten Walze (2) umgebenden Hülse (6) angeordnet ist, die von dem Walzenmantel (3) in axialer Richtung abziehbar ist.

2. Walzenaggregat nach Anspruch 1, dadurch gekennzeichnet, daß die Hülse (6) wenigstens in ihrem Abstützungsbereich aus einem Material mit einem kleineren Wärmeausdehnungskoeffizienten als dem des sie tragendem Walzenmantels (3) besteht.

3. Walzenaggregat nach Anspruch 2, dadurch gekennzeichnet, daß der Innendurchmesser der Hülse (6) im kalten Zustand im wesentlichen dem Außendurchmesser des sie tragenden Walzenmantels (3) entspricht.

4. Walzenaggregat nach Anspruch 2, dadurch gekennzeichnet, daß der Außendurchmesser des Walzenmantels (3) bei Raumtemperatur geringfügig kleiner als der Innendurchmesser der Hülse (6) ist und Mittel zum Erwärmen des Walzenmantels im Betrieb vorgesehen sind.

5. Walzenaggregat nach Anspruch 4, dadurch gekennzeichnet, daß bei Verwendung einer hydraulischen Abstützung des Walzenmantels (3) eine Temperierungseinrichtung für die Druckflüssigkeit vorgesehen ist, welche diese auf einer vorgegebenen Temperatur oberhalb der Raumtemperatur hält.

6. Walzenaggregat nach Anspruch 5, dadurch gekennzeichnet, daß die Temperierungseinrichtung auf einen solchen Kühlbetrieb umschaltbar ist, daß die Druckflüssigkeit eine Temperatur unterhalb der Raumtemperatur hat.

7. Walzenaggregat nach Anspruch 3, dadurch gekennzeichnet, daß der Außenumfang des Walzenmantels (3) bei Raumtemperatur kraftschlüssig am Innenumfang der Hülse (6) anliegt und Mittel zum Abkühlen des Walzenmantels (3) auf eine Temperatur unterhalb der Raumtemperatur außerhalb des Betriebs vorgesehen sind.

8. Walzenaggregat nach Anspruch 7, dadurch gekennzeichnet, daß bei Verwendung einer hydraulischen Abstützung des Walzenmantels (3) eine Kühleinrichtung für die Druckflüssigkeit vorgesehen ist, welche diese auf eine Temperatur unterhalb der Raumtemperatur kühlt.

9. Walzenaggregat nach einem der vorangehenden Ansprüche, dadurch gekennzeichnet, daß der Walzenmantel (3) eine für die alleinige Verwendung unzureichende, geringe Wandstärke besitzt und die im Betrieb erforderliche Stabilität durch Abstützen an die Hülse (6) erzielt wird.

10. Walzenaggregat nach einem der vorangehenden Ansprüche, dadurch gekennzeichnet, daß der Walzenmantel (3) eine geringere Wandstärke hat als die Hülse (6).

11. Walzenaggregat nach Anspruch 9 oder 10, dadurch gekennzeichnet, daß die Wandstärke des Walzenmantels (3) 5 bis 20 mm beträgt und diejenige der Hülse (6) 10 bis 30 mm beträgt, wobei die Summe beider 10 bis 40 mm ergibt.

12. Walzenaggregat nach Anspruch 11, dadurch gekennzeichnet, daß die Wandstärke des Walzenmantels etwa 8 mm und diejenige der Hülse etwa 18 mm beträgt.

13. Verfahren zum Herstellen eines Walzenaggregats nach einem der Ansprüche 9 bis 12, dadurch gekennzeichnet, daß der Walzenmantel aus einem ersten Rohr mit so großer Wandstärke gefertigt wird, daß es eine für die Erstbearbeitung ausreichende Eigenstabilität besitzt; daß als Erstbearbeitung der Außenumfang auf sein Nennmaß gebracht wird; daß anschließend die aus einem Material mit einem kleineren Wärmeausdehnungskoeffizient bestehende Hülse über das erste Rohr geschoben und durch eine Temperaturerhöhung kraftschlüssig mit diesem verbunden wird; und daß danach der Innenumfang des ersten Rohres auf sein Nennmaß gebracht wird.

14. Verfahren nach Anspruch 13, dadurch gekennzeichnet, daß die Hülse aus einem zweiten Rohr mit so großer Wandstärke gefertigt wird, daß es für eine die Erstarbeitung ausreichende Eigenstabilität besitzt; daß als Erstbearbeitung der Innenumfang auf sein Nennmaß gebracht wird; daß anschließend der aus einem Material mit einem größeren Wärmeausdehnungskoeffizienten bestehende Walzenmantel in das zweite Rohr geschoben und durch Temperaturerhöhung kraftschlüssig mit diesem verbunden wird; und daß danach der Außenumfang des zweiten Rohres auf sein Nennmaß gebracht wird.

**Claims**

1. A roller unit for calenders, glazing machines or the like, comprising a flexure-compensated roller (2) and a roller shell (3) which, for the compensation of deflections, is supported, e.g. hydraulically, and a companion roller (1), one of the rollers, the flexure-compensated roller (2) if required, having a removable surface engraving, characterised in that the surface engraving is disposed on a sleeve (6) surrounding the shell (3) of the flexure-compensated roller (2), said sleeve (6) being axially removable from the shell (3).

2. A roller unit according to claim 1, characterised in that at least the support zone of the sleeve (6) consists of a material having a lower coefficient of thermal expansion than that of the shell (3) which carries it.

3. A roller unit according to claim 2, characterised in that the inside diameter of the sleeve (6) when cold corresponds basically to the outside diameter of the shell (3) which carries it.

4. A roller unit according to claim 2, characterised in that the outside diameter of the shell (3) at room temperature is slightly smaller than the inside diameter of the sleeve (6) and means are provided for heating the shell in operation.

5. A roller unit according to claim 4, characterised in that when a hydraulic system is used to support the shell (3) a temperature control system is provided for the pressure fluid to keep the same at a predetermined temperature above room temperature.

6. A roller unit according to claim 5, characterised in that the temperature control system can be switched to cooling operation such that the pressure fluid has a temperature below room temperature.

7. A roller unit according to claim 3, characterised in that the outer circumferance of the shell (3) at room temperature bears operatively against the inner circumference of the sleeve (6) and means are provided to cool the shell (3) to a temperature below room temperature during inoperative periods.

8. A roller unit according to claim 7, characterised in that when the roller shell (3) is hydraulically supported a cooling system is provided for the pressure fluid to cool the same to a temperature below room temperature.

9. A roller unit according to any one of the preceding claims, characterised in that the shell (3) has a thin wall thickness which is inadequate for use on its own and the stability required for operation is obtained by support against the sleeve (6).

10. A roller unit according to any one of the preceding claims, characterised in that the shell (3) is of a thinner wall thickness than the sleeve (6).

11. A roller unit according to claim 9 or 10, characterised in that the wall thickness of the shell (3) is 5 to 20 mm and that of the sleeve (6) is 10 to 30 mm, the total of the two being 10 to 40 mm.

12. A roller unit according to claim 11, characterised in that the wall thickness of the shell is about 8 mm and that of the sleeve about 18 mm.

13. A method of making a roller unit according to any one of claims 9 to 12, characterised in that the shell is made from a first tube having a wall thickness such as to have inherent stability sufficient for the first machining operation; in that the first machining operation comprises bringing the outer circumference to its nominal dimension; in that the sleeve consisting of a material having a lower coefficient of thermal expansion is then pushed over the first tube and operatively connected thereto by a temperature increase; and in that the inner circumference of the first tube is then brought to its nominal dimension.

14. A method according to claim 13, characterised in that the sleeve is made from a second tube having a wall thickness such as to have inherent stability sufficient for the first machining operation; in that the first machining operation comprises bringing the inner circumference to its nominal dimension; in that the shell consisting of a material having a higher coefficient of thermal expansion is then pushed into the second tube and operatively connected thereto by temperature increase; and in that the outer circumference of the second tube is then brought to its nominal dimension.

**Revendications**

1. Ensemble de rouleaux pour calandres, lisseuses ou installations similaires, comportant un rouleau à compensation de flexion (2) et une enveloppe de rouleau (3) qui est soutenue, par exemple de manière hydraulique, en vue de compenser les flexions, ainsi qu'un rouleau conjugué (1), l'un des rouleaux, le cas échéant le rouleau à compensation de flexion (2), présentant une gravure superficielle amovible, caractérisé en ce que la gravure superficielle est agencée sur un fourreau (6) qui entoure l'enveloppe de rouleau (3) du rouleau à compensation de flexion (2), et qui peut être retirée en direction axiale, de l'enveloppe de rouleau (3).

2. Ensemble de rouleaux selon la revendication 1, caractérisé en ce que le fourreau (6) est réalisé, au moins dans sa zone de soutien, en un matériau avec un coefficient de dilatation thermique plus faible que celui de l'enveloppe de

4

rouleau (3) qui le supporte.

3. Ensemble de rouleaux selon la revendication 2, caractérisé en ce que le diamètre intérieur du fourreau (6) correspond, à l'état froid, sensiblement au diamètre extérieur de l'enveloppe de rouleau (3) qui le supporte.

4. Ensemble de rouleaux selon la revendication 2, caractérisé en ce que le diamètre extérieur de l'enveloppe de rouleau (3) est très légèrement inférieur, à température ambiante du local, au diamètre intérieur du fourreau (6), et en ce que des moyens sont prévus pour chauffer l'enveloppe de rouleau en cours de fonctionnement.

5. Ensemble de rouleaux selon la revendication 4, caractérisé en ce que dans le cas de l'utilisation d'un système d'appui hydraulique de l'enveloppe de rouleau (3), il est prévu un dispositif permettant de tempérer le liquide de pression en le maintenant à une température prédéterminée au-dessus de la température ambiante du local.

6. Ensemble de rouleaux selon la revendication 5, caractérisé en ce que le dispositif permettant de tempérer le liquide de pression peut être commuté sur un mode de fonctionnement en réfrigération, de telle sorte que le liquide de pression présente une température en-dessous de la température ambiante du local.

7. Ensemble de rouleaux selon la revendication 3, caractérisé en ce que la périphérie extérieure de l'enveloppe de rouleau (3) adhère sur la périphérie intérieure du fourreau (6) à température ambiante du local, et en ce que sont prévus des moyens permettant de réfrigérer l'enveloppe de rouleau (3) à une température inférieure à la température ambiante du local, en-dehors du fonctionnement.

8. Ensemble de rouleaux selon la revendication 7, caractérisé en ce que dans le cas de l'utilisation d'un système d'appui hydraulique de l'enveloppe de rouleau (3), il est prévu un dispositif de réfrigération du liquide de pression, qui refroidit ce liquide à une température inférieure à la température ambiante du local.

9. Ensemble de rouleaux selon l'une des revendications précédentes, caractérisé en ce que l'enveloppe de rouleau (3) possède une épaisseur de paroi faible, insuffisante pour être utilisée seule, et en ce que la stabilité nécessaire en cours de fonctionnement, est obtenue par appui sur le fourreau (6).

10. Ensemble de rouleaux selon l'une des revendications précédentes, caractérisé en ce que l'enveloppe de rouleau (3) présente une épaisseur de paroi plus faible que le fourreau (6).

11. Ensemble de rouleaux selon la revendication 9 ou 10, caractérisé en ce que l'épaisseur de paroi de l'enveloppe de rouleau (3) vaut 5 à 20 mm, et celle du fourreau (6) 10 à 30 mm, la somme des deux épaisseurs donnant 10 à 40 mm.

12. Ensemble de rouleaux selon la revendication 11, caractérisé en ce que l'épaisseur de paroi de l'enveloppe de rouleau vaut environ 8 mm et celle du fourreau environ 18 mm.

13. Procédé de fabrication d'un ensemble de rouleaux selon l'une des revendications 9 à 12, caractérisé en ce que l'enveloppe de rouleau est réalisée à partir d'un premier tube présentant une épaisseur de paroi assez grande pour lui assurer une rigidité propre suffisante pour le premier usinage, en ce que le premier usinage consiste à amener la périphérie externe à sa dimension nominale, en ce que le fourreau constitué d'un matériau à coefficient de dilatation thermique moins élevé est ensuite engagé sur le premier tube et y est relié par adhérence grâce à une élévation de température, et en ce que la périphérie intérieure du premier tube est alors amenée à sa dimension nominale.

14. Procédé selon la revendication 13, caractérisé en ce que le fourreau est fabriqué à partir d'un deuxième tube présentant une épaisseur assez grande pour lui assurer une rigidité propre suffisante pour le premier usinage, en ce que le premier usinage consiste à amener la périphérie intérieure à sa dimension nominale, en ce que l'enveloppe de rouleau constituée d'un matériau à coefficient de dilatation thermique plus élevé est ensuite emmanchée dans le deuxième tube et y est liée par adhérence grâce à une élévation de température, et en ce que la périphérie extérieure du deuxième tube est ensuite amenée à sa dimension nominale.

FIG. 1

FIG. 2